# EUROPEAN PATENT APPLICATION

(11) **EP 2 799 372 A1**
(43) Date of publication of application: **05.11.2014**
(21) Application number: 13166108.4
(22) Date of filing: 01.05.2013
(51) Int. Cl.: B65G 17/18, A01K 43/00

(54) **A method and a processing station for processing shell eggs**

(71) Applicant: Sanovo Technology A/S, 5210 Odense NV (DK)
(72) Inventor: Holst, Jan Holm, DK-5270 Odense N (DK); Madsen, Aksel Morten, 5560 Aarup (DK)
(74) Representative: Rohde, Vibeke Warberg

(57) **Abstract**

A method and a processing station for processing shell eggs, where the eggs (1) are fed to a processing station via an egg in-feed opening (11), conveyed through a processing zone past at least one processing unit (25), and discharged via an egg output opening (12). The pre-defined path of the conveyor includes at least three non-horizontal sections. The processing unit is preferably a spraying device for cleaning eggs.

## Description

The present invention relates to a method and a processing station for processing shell eggs where the eggs are fed to a processing station via an egg in-feed opening, conveyed through a processing zone on an egg conveyor past at least one processing unit, and discharged via an egg output opening, and where the eggs are conveyed along a pre-defined path from the in-feed opening to the output opening.

Such a method and processing station are known from WO95/00012, which discloses an egg washer, where the eggs are conveyed on a roller conveyor passing under a series of spray nozzles and brushes. Such washers has proven to work very well at moderate speeds, but in many modern egg processing facilities it has been found necessary to arrange two or more such washers in continuation of each other, the first often serving as a pre-washer.

WO2011050169 discloses a dryer of a similar design, but where the drying capacity has been increased by carefully controlling the humidity and flow direction of the air. In this processing station too, the eggs are conveyed on rollers, which are used in virtually all kinds of processing stations and throughout egg processing plants, including inspection stations and candling stations.

Still another attempt to increase the efficiency of an egg processing station is known from US 6,883,528, where a pre-washing zone has been integrated in a washer above the actual washing conveyor. The pre-washing zone includes an open-structured belt conveyor passing underneath a series of spray nozzles. The washing zone includes a traditional roller conveyor running in two planes, spray nozzles and different kinds of brushes. This apparatus is very compact and provides a relatively long time of exposure to the cleaning solution, which is typically water mixed with a cleaning agent, but suffers from several disadvantages. Firstly, it is very complex and hence both expensive and difficult to maintain. Secondly, a relatively high number of eggs are breaking unintentionally. Thirdly, the cleaning solution applied in the pre-washing zone, where the eggs are most dirty, runs down into the washing zone.

It is therefore an object of the invention to provide a method and an egg processing station, where shell eggs can be properly processed without necessitating very large or complex equipment. Another object of the invention is to provide a method and an egg processing station, which may be employed for two or more different purposes within an egg processing plant with only a minimum of adaptation.

This is achieved with a method and an apparatus where the pre-defined path includes at least three non-horizontal sections, where on a first of these sections the eggs are conveyed away from a first horizontal level at the in-feed opening to a second horizontal level in the processing zone, where on a second of these sections the eggs are conveyed from the second horizontal level to a third horizontal level, said third horizontal level being located on the same side of the second horizontal level as the first horizontal level, and where on a third of these sections the eggs are conveyed to the output opening. In other words the eggs are conveyed either upwards or downwards from the in-feed opening, into the processing zone and then back towards the level of the in-feed opening, before finally being taken to the output opening. This design of the conveyor makes the actual path followed by each egg longer than the horizontal distance between the in-feed and output openings, thus in practice providing a compression of the egg processing station when compared to traditional stations with a horizontal conveyor path. It is noted that though the entire path of the conveyor between the in-feed opening and the output opening seen in the direction of travel of the eggs is usually within the processing zone, it is in principle also possible to have sections or sub-sections of the conveyor outside the processing zone. As an example it may be advantageous to have idle periods in some processes, where the eggs are allowed to rest or set before being further processed.

It is presently preferred that the total length of the sections of the egg conveyor extending from the in-feed opening to the output opening seen in the direction of travel of the conveyor, i.e. the path followed by each egg, is at least 4 times, preferably at least 6 times, and still more preferred at least 8 times the horizontal distance between the in-feed opening and the output opening. This may be achieved by making the three non-horizontal sections mentioned above long and steep, but it is presently preferred to include two or more further conveyor sections extending between the second and third horizontal levels.

The path of the egg conveyor may have a zig-zag shape, where two neighbouring non-horizontal sections meet in a turning point, but it is presently preferred that at least some of the non-horizontal sections are interconnected by intermediate sections, which are at least partially horizontal, thus forming an undulated conveyor. The undulated path provides a larger turning radius where the direction of the path of the conveyor changes, which is often advantageous when handling eggs and like round object, which are prone to rolling off the conveyor, at high speeds. A simple undulated path with substantially vertical sections interconnected by substantially semi-circular intermediate sections is presently preferred due to its structural and technical simplicity, but more complex paths with section running for example backwards towards the in-feed opening are also possible.

For practical reasons, the output opening will often also be located substantially at the first horizontal level, but this need not be the case. Likewise, it may be advantageous that the third horizontal level is located above the first horizontal level, so that the processing station may be made relatively tall without providing a pit in the floor or having to have the in-feed opening at an elevated position, where it will be difficult to monitor manually, but such embodiments are not excluded.

The egg conveyor may in principle be a conveyor continuing uninterrupted from another unit and into processing station, but to achieve optimal flexibility of the system it is presently preferred to use a separate conveyor in each egg processing unit. The egg conveyor is then preferably a closed-loop conveyor with a return section extending from the output opening to the in-feed opening seen in the direction of travel of the conveyor.

To facilitate transfer of eggs from an external conveyor to the egg conveyor of the processing station it is preferred that the second horizontal level is located below the first and third horizontal levels, meaning that the eggs are travelling downwards when being moved away from the in-feed opening.

Traditional roller conveyors or belt conveyors used in egg processing stations can only be used at relatively low inclinations of the conveyor, typically up to 40 degrees above horizontal for the roller conveyors. To allow steeper or even vertical conveyor sections, the egg conveyor may comprise a plurality of egg holders each adapted for holding a single egg. Such holders should of course be adapted to be able to hold the egg securely when the conveyor changes direction, i.e. at the transition from one section of the conveyor to another, and may also contribute to providing a smooth reception of eggs at the in-feed opening. As an example, the position of each egg holder in relation to the egg conveyor may be changed as the egg holder passes the in-feed opening. This may for example be done by displacing the holders to compensate for a difference in the running speeds of an in-feed conveyor and the egg conveyor of the processing station. Another or supplemental possibility is to provide means for turning or tilting each egg holder when in the vicinity of the in-feed opening.

Many processes performed on shell eggs, such as washing, disinfection and drying requires exposure of substantially the entire exterior surface of the egg shell. The area of contact between the egg holder and the egg shell should therefore be as small as possible. This may be achieved by using egg holders, each comprising two or more wire members, rod members or plate members forming a cradle for the egg and/or a set of fingers arranged so that the egg may rest on their tips. Moreover, it may be advantageous to provide means for turning the eggs in the egg holders, either in the form of external units affecting the egg directly, such as brushes or air injection nozzles, external units affecting the egg holder so that they are tilted causing the eggs to roll over in the egg holders, in build-in units in the egg holders, such as rollers forcing the eggs to change position by friction upon activation.

The type(s) of processing unit(s) found in the processing station will of course depend on its intended use, examples being washing, shell disinfection, drying, cooling and conservation of the eggs. In addition to liquid inlets, gas inlets, air inlets, spray nozzles, blowers, heaters and brushes, which may be used for these purposes, the processing station may also include processing units used for monitoring the process and/or for rejecting or sorting out eggs, such as cameras, light sources and candling devices. Though the different types of processing units are mentioned in the plural form above, it is to be understood that there need only be one unit of a particular type and that all of the different types mentioned need not be present.

One embodiment of the processing station is an egg pre-washing or washing station including at least one liquid supply and at least one liquid outlet and where at least one processing unit is adapted for pouring and/or spraying water and/or a water-based cleaning solution onto eggs on the egg conveyor. In operation a cleaning solution will usually be held in a liquid tank and distributed to the different processing units by means of a liquid distribution system including a pump and preferably also a filter, so that the liquid may be recirculated. Additional liquid may be supplied to compensate for losses due evaporation and liquid leaving the processing station on the egg shell.

It is noted that pre-washing is generally distinguished from the actual washing in that it involves only a wetting of the egg shells with a cleaning solution, this process sometimes also being referred to as pre-soaking, whereas the actual washing usually also includes the use of brushes rubbing the shells of the eggs. A processing station may include both a pre-washing zone and a washing zone. A screening device may be provided to reduce the risk of contamination of the washing zone with liquid from the pre-washing zone, but in most cases it may be largely eliminated simply by providing these sections side-by-side, since the cleaning solution and/or water used will run down under the influence of gravity. For the same reason it is preferred that the third section of a pre-washing and/or washing station extends upwards when seen in the direction of the travel of the conveyor, so that the water or cleaning solution will be running from the cleaner eggs to the dirtier ones. Like considerations apply to for example dryers, where liquid from the wetter eggs will not drip down onto the drier ones.

In the following the invention will be illustrated in closer detail by reference to specific non-limiting embodiments shown in the drawing, where:
Fig. 1 is a cross-sectional sketch of a processing station with a pre-washing and a washing zone,
Fig. 2 is an enlargement of the detail marked II in Fig. 1 and showing the in-feed,
Fig. 3 is an enlargement of the detail marked III in Fig. 1 and showing the output,
Fig. 4 shows a perspective view of an egg holder,
Fig. 5 shows the egg holder in Fig. 4 from above as indicated by the arrow V in Fig. 4,
Fig. 6 shows the egg holder in Fig. 4 from the end as indicated by the arrow VI in Fig. 4,
Fig. 7 shows a perspective view of nine egg holders as in Figs 4-6 arranged end-to-end,
Fig. 8 corresponds to Fig. 7, but showing the egg holders from the side as indicated by the arrow VIII in Fig. 7,
Fig. 9 corresponds to Fig. 1, but showing a processing station with a washing and a disinfection zone,
Fig. 10 shows two prior art washing stations arranged end-to-end, and
Fig. 11 shows a pre-washing station according to the invention and a prior art washing station arranged end-to-end.

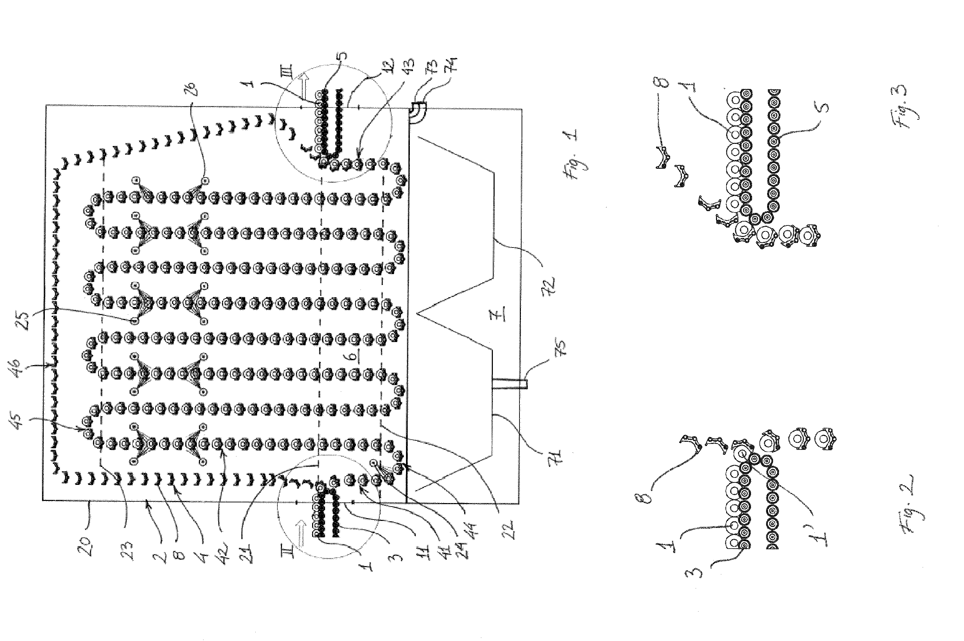

An example of a processing station according to the invention in the form of a combined pre-washer and washer is shown in cross section in Fig. 1. Eggs 1 are fed to the processing station 2 on an in-feed conveyor 3, which passes through an in-feed opening 11 in the housing 20 of the processing station and a short distance into it. At the end of the in-feed conveyor eggs are transferred to the egg conveyor 4 of the processing station and at the opposite side of the processing station the eggs are transfer onto an output conveyor 5, projecting a short distance into the processing station through an output opening 12.

From the in-feed opening 11 a first vertical section 41 of the egg conveyor travels downwards from a first horizontal level 21 represented by the upper side of the in-feed conveyor to a second horizontal level 22 at the bottom of the processing station. A semi-circular intermediate section 44 connects the first vertical conveyor section 41 to a second vertical section 42 travelling upwards to a third horizontal level 23 at the top of the processing station, where it is again connected to a similar, but inverted intermediate section 45. Together with seven further vertical sections and seven further intermediate sections they form an undulated conveyor path extending from the in-feed opening 11 to the output opening 12, which is also located at the first horizontal level 21. The last vertical section 43, serving as the third non-horizontal section, extends from the last intermediate section at the second horizontal level 22 to the end of the output conveyor 5. The total length of the sections of the egg conveyor extending from the in-feed opening to the output opening in the direction of travel of the conveyor is here approximately 10 times the horizontal distance between the in-feed opening and the output opening.

The total number of non-horizontal or vertical sections may vary depending for example on the intended use of processing station and the efficiency of the processing units used. For most purposes 2-12 further non-horizontal sections between the second and third sections will be appropriate, most requiring 3-8 further sections.

In the embodiment in Fig. 1, the processing zone 6 is delimited by the housing 20, the prewashing, washing and rinsing zones being separated only by being arranged in different vertical planes and gravity acting on the liquids used.

The egg conveyor 4 shown is a closed loop conveyor with a return section 46 extending over the other sections. Though not shown it is to be understood that conveyor cleaning, inspection or repair units may be found along the path of the return section.

Egg processing units, here in the form of spray nozzles 24,25,26, are provided along the conveyor and adapted for wetting the eggs as they pass. Here a pre-wetting nozzle 24 is arranged at the end for the first non-horizontal section 41 of the conveyor, washing nozzles 25 are provided at the vertical sections travelling upwards and two rinsing nozzles 26 are provided at the last vertical section before the third section 43.

In this case, there are no brushes or like mechanical means for cleaning the egg shells and it is therefore preferred to use a cleaning solution consisting of water and a cleaning agent. The pre-wetting nozzle 24 is then used for initially wetting the egg shells with a cleaning solution, while the washing nozzles 25 are supplied with either water or a cleaning solution, both of which may be heated, and the rinsing nozzles 26 with clean water for removing the cleaning agent used.

The fact that the washing nozzles 25 are provided only at the sections having an upwards direction of travel means that the used cleaning solution will flow or drip onto the eggs which have not yet reached the nozzle in question and which are consequently more dirty. The additional wetting of these eggs will help contribute to a more efficient cleaning without the risk of recontamination of eggs, which have already been cleaned.

As illustrated, the washing and rinsing nozzles are oriented in different directions to ensure that the all sides of the eggs are thoroughly wetted.

Below the processing zone 6 is a liquid collection unit 7 including two collection tanks 71,72. The first collection tank 71 is receiving water or cleaning solution flowing or dripping of eggs at the first stages of the pre-washing and washing process, while the second tank 72 is receiving the liquid used at the last stages of the process. This means that during normal operation the liquid collected in the second tank 72 will be cleaner than that in the first tank 71 and it will often be possible reuse the liquid from the second tank in the first stages of the cleaning process.

A liquid inlet for cleaning solution 73, a water inlet 74 and a liquid outlet 75 are here integrated in the liquid collection unit 7, the inlets being connected to the spray nozzles via internal piping (not shown). The inlets may, however, also be found in the housing 20, and the outlet may be through the side of the housing 20.

In the preferred embodiment the liquid is recirculated so that liquid from the tanks 71,72 is supplied to the pre-wetting and washing nozzles 24,25. One or more filters (not shown) should be provided to prevent the pump (not shown) and nozzles from being clogged up.

When recirculating the liquid, the tanks 71,72 are preferably provided with sensors adapted for detecting the liquid level and the cleaning agent content. If the liquid level becomes too low, additional water can be added, and if for example the conductivity of the cleaning liquid reaches an unacceptable level, additional cleaning agent can be added. The tanks will however have to be emptied entirely at regular intervals to allow cleaning and/or a total replacement of the liquid.

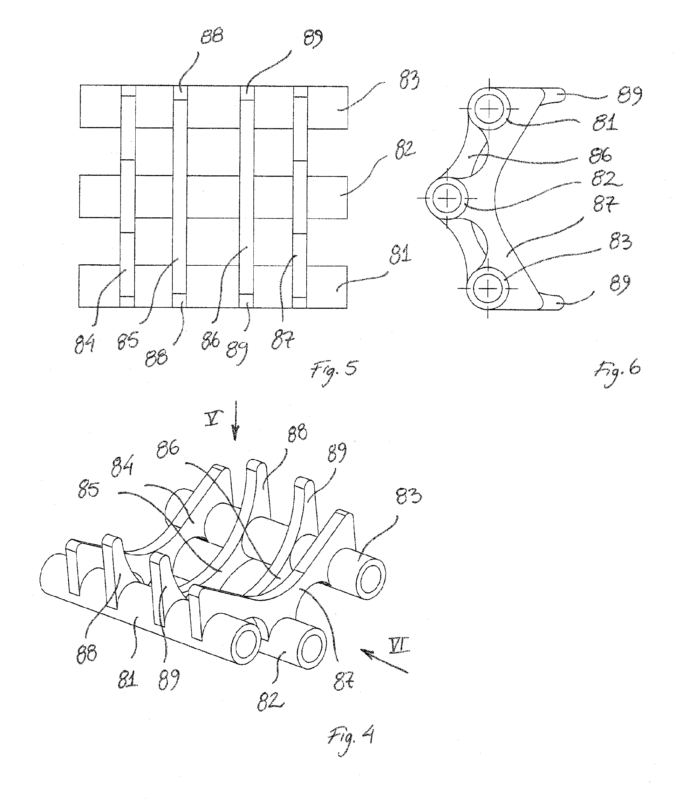

As may also be seen in Figs 2 and 3, the egg conveyor 4 is here composed of a series of discrete egg holders 8, each receiving one egg 1 at a time from the egg in-feed conveyor 3 and delivering them to the output conveyor 5 in a similar manner. When seen from the end as also shown in Fig. 6, each egg holder is bowl shaped with a hollow fitting the size and shape of an egg. When passing the in-feed opening 11 each egg holder is turned almost 90 degrees so that an egg 1' is caught in a pocket formed between the egg holder and rollers of the conveyor. As the egg holder travels downwards it is turned back towards its initial position, so that when the egg finally comes out of engagement with the in-feed conveyor it is held securely in the egg holder. This mode of transferring the eggs not only allows the eggs to roll of the in-feed conveyor and into the egg holders, but also compensates for a difference in distance between the rollers of the conveyor and the egg holders. The distance between rollers of the conveyor is typically 2 inches or approximately 5 cm, whereas the distance between the egg holders will typically be about 3 inches or approximately 7.5 cm to give room for the processing. It will also be possible to compensate wholly or partially for this difference by running the egg conveyor in an oscillating manner, but this is currently not preferred due to the complexity of and expected hard wear on such a system.

The fact that the eggs 1 are lying in the same egg holder 8 all through the processing station has the advantage, that the frequent transfers of eggs known from prior art processing station in US 6,883,528 are avoided. Even though such transfers are performed very cautiously they inevitably involve a risk of weak eggs breaking and in modern egg processing facilities handling more than 200,000 eggs per hour, even the smallest improvement will result in a considerably increased production.

The egg holders 8 may be designed in many different ways as long as they are able to receive and deliver the eggs 1 without damaging them and to provide a good support for the eggs when transporting them through the processing zone. One such embodiment of the egg holder is shown in Figs 4-6. As may be seen, it is composed of three pipe-shaped portions 81,82,83 interconnected by four plate members 84,85,86,87 having curved surfaces on the side intended to face the egg. The two outer plate members 84,87 are slightly higher at the centre than the middle plate members 85,86, which in turn are provided with projecting parts 88,89 so that together they are forming a bowl-shaped hollow. This design is relatively open allowing water or a cleaning solution to be applied even from below, but with no sharp edges coming into contact with the egg. The egg holder is preferably made from a polymer, such as polyethylene (PE), polyoxymethylene (POM), polyvinyliden-flourid (PVDF) or polypropylen (PP), but metals, ceramics or composites made also be used.

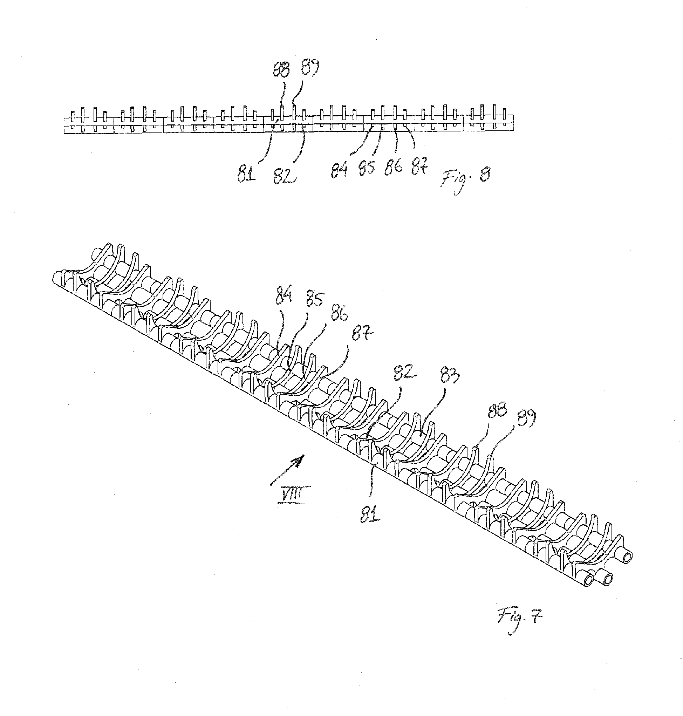

In Fig. 1 the egg conveyor is shown from the side and hence represented by only a single egg holder for each individual position in the processing station, but it is to be understood that each of these egg holders may represent a row of egg holders extending perpendicular to the plane of the paper. Such a row formed of egg holders as the one in Figs 4-6 is shown in Figs 7 and 8. As may be seen these egg holders are arranged end-to-end so that the pipe-shaped portions 81,82,83 form three continuous pipes extending in the length direction of the row. For keeping the egg holders in position in relation to each other, one or more rods (not shown) may be passed through these pipes and these rods may advantageously be used for interconnecting the egg holders to a drive member of the conveyor, which will typically be a chain or belt. Moreover, one or more such rods may be provided with wheels or knops at the ends, these wheels or knops being adapted for engagement with guide tracks provided in a frame (not shown) or the housing 20 of the processing station and defining the path of the conveyor. When two rods are engaging two adjacent guide tracks, these may be used for providing the turning or tilting of the egg holders described with reference to Figs 2 and 3 above. The use of guide tracks of this type are well known to the skilled person and will therefore not be described in further detail here.

An alternative way of arranging the egg holders is to suspend them more or less freely and to provide a catch member (not shown) before the in-feed and the output openings. Such a catch member may for example catch the outermost pipe section 83 facing away from the in-feed opening and thus cause a tilting of the egg holder 8 as shown in Figs 2 and 3. It is not necessary for the catch member to get a firm hold of the egg holder; friction between the egg holder and the catch member may be sufficient. Likewise, catching one holder of a row as in Figs 7 and 8 may be sufficient for turning or tilting the entire row.

In another alternative the egg holder is passed into a still more narrow passage when advanced by the conveyor, thereby being forced to turn, but this of course prerequisites that the height of the egg holder in the untilted position is smaller than its width.

With a slight adaptation, one or more of the pipe-shaped portions 81,82,83 may be made rotatable about its length axis and positioned to be in contact with an egg in the holder, so that may be used for turning the egg and exposing sections of the egg shell, which was hitherto in contact with the egg holder. As such a turning mechanism will rely on friction between the pipe-shaped section and the egg shell, the pipe-shaped section may be made from a different material than the rest of the holder or provided with a surface layer.

A tilting of the egg holder 8 as described above with reference to Figs 2 and 3 may also be used within the processing zone for repositioning the egg in the holder and expose new sections of the egg shell.

The in-feed conveyor 3, the egg conveyor 4 and output conveyor 5 are preferably driven by motors in a manner known per se, the motor driving the egg conveyor preferably being integrated in the processing unit. In the embodiment in Fig. 1 it is located on the back side of the housing 20 and is hence not visible.

To allow maintenance and repairs it is preferred that at least one side of the housing 20 can be opened substantially entirely or easily removed to expose the interior of the processing station 2 as in Fig. 1. It is also preferred that the housing includes one or more windows (not shown) allowing inspection of the processing station during operation.

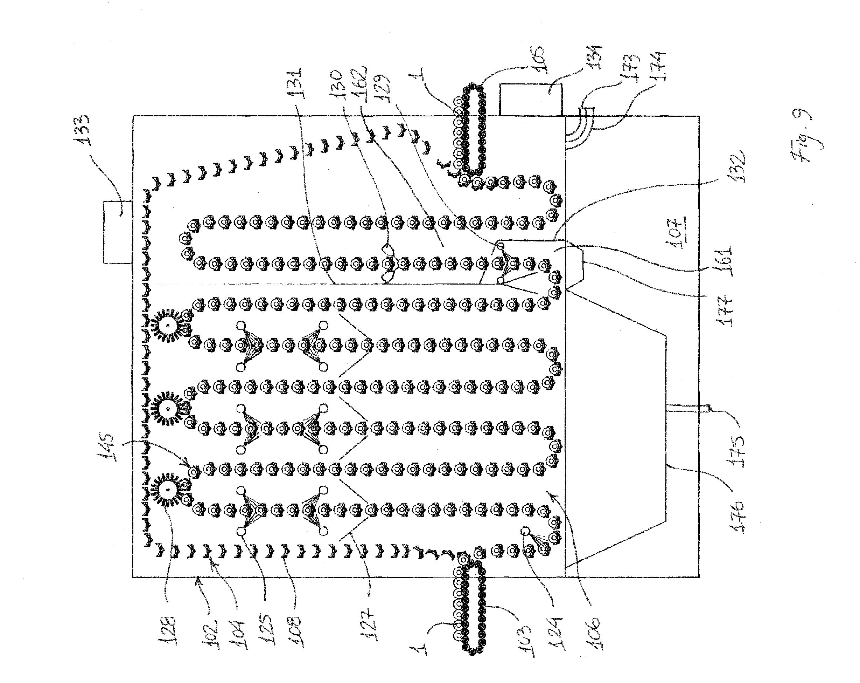

Fig. 9 shows an alternative embodiment of a processing station. For features in this embodiment having the same or analogous function as those in Fig. 1 the same reference numerals have been used but with 100 added. Such features will generally not be described in further detail.

As may be seen the overall build of the processing 102, the path of the egg conveyor 104 and the egg holders 108 are of the type described above.

This embodiment includes only twelve washing nozzles 125 arranged at the first three vertical upwards sections of the egg conveyor, but the washing capacity is substantially the same thanks to the provision of baffle plates 127 arranged underneath the washing nozzles and brushes 128 arranged at the upper intermediate sections 145. The baffles plates 127 are arranged in a V-shape forming a funnel around the egg conveyor, so that a larger percentage of the washing solution ejected from the washing nozzles 125 is caused to run over the eggs, which have not yet reached the nozzles, thereby increasing the wetting. The primary purpose of the brushes 128 is to provide friction against the eggs 1 passing underneath them, so that the eggs are forced to turn in the egg holders 108, but the brushes may also rub off dirt on egg shells. The friction applied by the brushes should of cause be carefully adjusted so that the shells of the eggs are not broken. The number and position of the baffle plates and brushes may be changed depending on the demand as will be readily imaginable to the skilled person.

In the embodiment in Fig. 9 the space occupied by the rinsing nozzles 26 in Fig. 1 is instead occupied by a disinfection zone with a pair of disinfection nozzles 129 and a drying zone with a set of air blades 130 for blowing residue liquid off the egg shells. Each of these zones are a confined subsection 161,162 of the processing zone, which are separated from the washing zone 106 and from each other by partition walls or baffles 131,132. In the drying zone 162 the air is conditioned to be relatively hot and/or dry by a pair of ventilators or air conditioning units 133,134 arranged in the top and on the side of the housing 20, respectively, so that together they can create an airflow through the drying zone.

The liquid collection unit 107 here includes a first collection tank 176 receiving water or cleaning solution originating from the pre-washing nozzle 124 and washing nozzles 125, and a second tank 177 receiving used disinfection liquid. As in the embodiment in Fig. 1, this embodiment too comprises two liquid inlets 173,174, but here the second inlet 174 is used for disinfection fluid instead of water. Only a single outlet 175 from the first collection tank 176 is shown, but it is to be understood that a separate outlet from the disinfection liquid tank 177 may be provided.

A dryer may be build in substantially the same way as the processing stations in Figs 1 and 9, by replacing the spray nozzles with air nozzles and/or air blades, possibly supplemented with means for controlling the direction, temperature and/or humidity of the air in the processing zone(s). Processing stations for other purposes may be build by replacing or supplementing the processing units with units of different kinds.

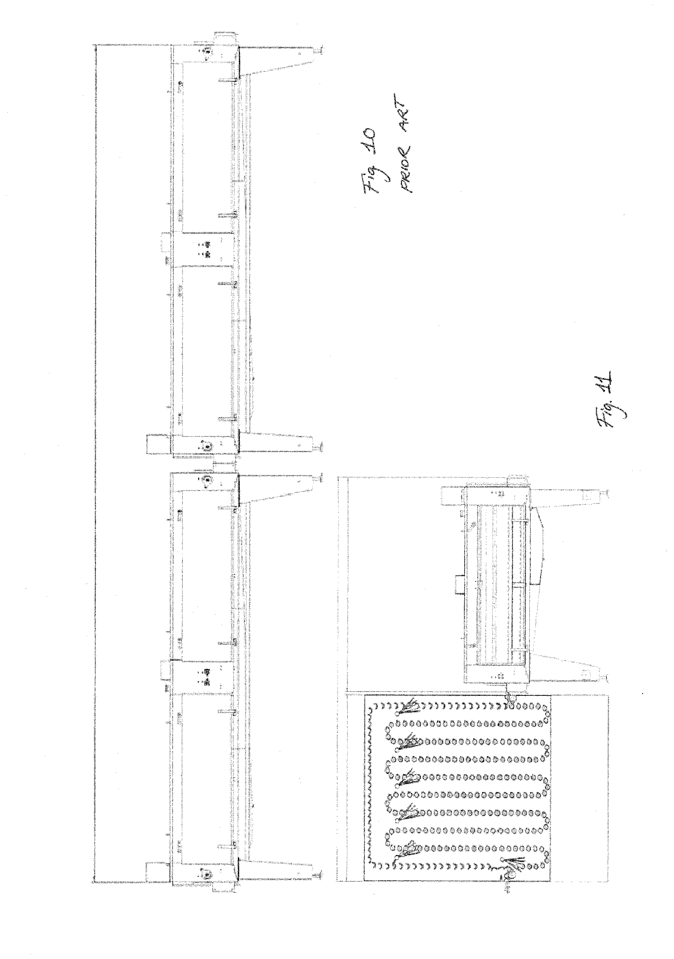

The undulated path of the egg conveyor 4,104 allows the processing station to be very compact in comparison to traditional processing stations. This is seen by comparing Figs 10 and 11, Fig. 10 showing two traditional washing stations arranged end-to-end and Fig. 11 showing a traditional washing station arranged in continuation of a washing station according to the invention.

The prior art washing line in Fig. 10 has a total length of 9 meters and provides a total washing time of 50-55 seconds when running at 12,000 eggs per hour in each position or 216,000 eggs per hour in total for an apparatus where each row includes 18 egg holders.

In the new washing line in Fig. 11, the total length is 4.5 meters and the total washing time is 70-75 seconds when running at the same speed, distributed on approximately 60 seconds in the washing station according to the invention and 10-15 seconds in the traditional washing station. In other words, the exposure time for each meter of factory floor space occupied is 3 times as high with the new washing line and can be even higher with a washing line based solely on the new type of washing station.

Similar comparisons can be made with traditional processing stations used for disinfection, drying etc.

Above the invention has primarily been illustrated with reference to particular embodiments of washing and disinfection processes, but is will be understood that may other processes, where exposure time is of importance, will benefit from the invention in a similar way. It will also be understood that different features of the embodiments described may be combined in different ways than those explicitly described, for example using air blades as in Fig. 9 for blowing off residual washing or rinsing liquid in a processing station as in Fig. 1.

## Claims

1. A method for processing shell eggs where the eggs are fed to a processing station via an egg in-feed opening, conveyed through a processing zone past at least one processing unit, and discharged via an egg output opening, where the eggs are conveyed on an egg conveyor along a pre-defined path from the in-feed opening to the output opening, **characterized in that** the pre-defined path includes at least three non-horizontal sections, where on a first of these sections the eggs are conveyed away from a first horizontal level at the in-feed opening to a second horizontal level in the processing zone, where on a second of these sections the eggs are conveyed from the second horizontal level to a third horizontal level, said third horizontal level being located on the same side of the second horizontal level as the first horizontal level, and where on a third of these sections the eggs are conveyed to the output opening.

2. A method according to any of the preceding claims, where the pre-defined path is such that each egg is conveyed over a total distance from the in-feed opening to the output opening, which is at least 4 times, preferably at least 6 times, and still more preferred at least 8 times the horizontal distance between the in-feed opening and the output opening.

3. A method according to any of the preceding claims, where the eggs are conveyed along two or more further sections extending between the second horizontal level and the third horizontal level.

4. A method according to any of the preceding claims, where each egg is held in a separate egg holder on the egg conveyor.

5. A method according to claim 4, where the position of each egg holder in relation to the egg conveyor is changed as the egg holder passes the in-feed opening.

6. A processing station for shell eggs comprising an egg in-feed opening, a processing zone with at least one processing unit, an egg output opening and an egg conveyor extending from the egg in-feed opening, through the processing zone to the egg output opening, **characterized in that** the egg conveyor includes at least three non-horizontal sections, a first of these sections extending from a from a first horizontal level at the in-feed opening to a second horizontal level in the processing zone, a second of these sections extending from the second horizontal level to a third horizontal level, said third horizontal level being located on the same side of the second horizontal level as the first horizontal level, and a third of these sections extending to the output opening.

7. A processing station according to claim 6, where the total length of the sections of the egg conveyor extending from the in-feed opening to the output opening seen in the direction of travel of the conveyor is at least 4 times, preferably at least 6 times, and still more preferred at least 8 times the horizontal distance between the in-feed opening and the output opening.

8. A processing station according to any of claims 6-7, including two or more further conveyor sections extending between the second horizontal level and the third horizontal level.

9. A processing station according to any of claims 6-8, where at least some of the non-horizontal sections are interconnected by intermediate sections, which are at least partially horizontal.

10. A processing station according to any of claims 6-9, where the third horizontal level is located above the first horizontal level.

11. A processing station according to any of claims 6-10, where the second horizontal level is located below the first and third horizontal levels.

12. A processing station according to any of claims 6-11, where the egg conveyor is a closed-loop conveyor with a return section extending from the output opening to the in-feed opening seen in the direction of travel of the conveyor.

13. A processing station according to any of claims 6-12, where the egg conveyor comprises a plurality of egg holders each adapted for holding a single egg.

14. A processing station according to claim 13, further comprising means for changing the position of each egg holder in relation to the egg conveyor, such as means for turning or tilting each egg holder when in the vicinity of the in-feed opening and/or the output opening.

15. A processing station according claim 13 or 14, where each holder comprises two or more wire members, rod members or plate members forming a cradle for the egg and/or a set of fingers arranged so that the egg may rest on their tips.

16. A processing station according to any of claims 6-15, where the processing unit(s) is/are chosen from the group comprising: liquid inlets, gas inlets, air inlets, spray nozzles, blowers, heaters, brushes, cameras, light sources and candling devices.

17. An egg pre-washing or washing station made according to any of claims 6-16, further including at least one liquid supply and at least one liquid outlet and where at least one processing unit is adapted for pouring and/or spraying water and/or a water-based cleaning solution onto eggs on the egg conveyor.
